# EUROPÄISCHE PATENTSCHRIFT

(11) **EP 2 026 969 B1**
(45) Veröffentlichungstag und Bekanntmachung des Hinweises auf die Patenterteilung: **05.01.2011**
(21) Anmeldenummer: 07729420.5
(22) Anmeldetag: 23.05.2007
(51) Int. Cl.: B32B 37/10, B30B 1/14

(54) **LAMINIERVORRICHTUNG FÜR PERSONALISIERUNGSDOKUMENTE**
LAMINATING APPARATUS FOR PERSONALIZATION DOCUMENTS
DISPOSITIF DE LAMINAGE POUR DES DOCUMENTS PERSONALISÉS

(30) Priorität: 03.06.2006 DE 102006026086
(43) Veröffentlichungstag der Anmeldung: 25.02.2009
(73) Patentinhaber: Mühlbauer AG, 93426 Roding (DE)
(72) Erfinder: HEUBACH, Lutz, 09350 Lichtenstein/Sachsen (DE); SCHILDE, Peter, 93194 Walderbach (DE)
(74) Vertreter: Schmidt, Steffen
(86) Internationale Anmeldenummer: PCT/EP2007/054982
(87) Internationale Veröffentlichungsnummer: WO 2007/141138

(56) Entgegenhaltungen:
- EP-A- 0 084 349
- EP-A- 1 452 297
- WO-A-85/01913
- DE-B- 1 176 987
- US-A- 3 057 241
- US-A- 3 666 603

## Beschreibung

Die Erfindung betrifft eine Laminiervorrichtung für Personalisierungsdokumente zum serienmäßigen Laminieren von Oberflächen der Personalisierungsdokumente mit einem Auflageelement zum Auflegen mindestens eines der Personalisierungsdokumente und einem Druckelement zum Andrücken einer Laminatfolie auf die Oberfläche des auf dem Auflageelement angeordneten Personalisierungsdokumentes gemäß dem Obergriff des Patentanspruches 1.

Personalisierungsdokumente, wie beispielsweise Reisepässe, Personalausweise oder Smartcards werden bisher mittels eines sogenannten Rollenlaminationsvorganges mit einer Laminatfolie an ihrer Oberfläche versehen, indem die Pässe oder Smartcards zwischen zwei Rollen, die gegeneinander drücken, zusammen mit der Laminatfolie hindurchgeführt werden. Entweder zeitgleich oder kurz vor der eigentlichen Durchführung der Pässe durch die Rollen findet eine Erwärmung der Laminatfolie statt, um hierdurch einen an der Unterseite der Laminatfolie angeordneten Heißkleber kurzzeitig zu erwärmen und damit zu aktivieren, sodass eine dauerhafte Klebeverbindung zwischen einer Oberfläche des Reisepasses bzw. Dokumentes und der Laminatfolie entsteht, wie in US-A-3 666 603 beschrieben

Zusätzlich kann mittels der Erwärmung eine bestehende Haftung zwischen der Laminatfolie und einem Laminatfolienträgerband gelöst werden, um hierdurch einen reibungslosen Übergang der Laminatfolie von dem Laminatfolienträgerband auf die Oberfläche des Dokumentes sicherzustellen.

Derartige Rollenlaminationsvorgänge weisen üblicherweise eine Zykluszeit von ca. 20 Sekunden auf, innerhalb welcher die Oberflächenlaminierung eines Dokumentes vollständig abgeschlossen ist.

Demzufolge liegt der vorliegenden Erfindung die Aufgabe zugrunde, eine Laminiervorrichtung für Personalisierungsdokumente zum serienmäßigen Laminieren von Oberflächen der Personalisierungsdokumente zur Verfügung zu stellen, die ein schnelles Laminieren der Dokumente ermöglicht.

Diese Aufgabe wird gemäß den Merkmalen des Patentanspruches 1 gelöst.

Erfindungsgemäß weist eine Laminiervorrichtung für Personalisierungsdokumente zum serienmäßigen Laminieren von Oberflächen der Personalisierungsdokumente mit einem Auflageelement zum Auflegen mindestens eines der Personalisierungsdokumente und einem Druckelement zum Andrücken einer Laminatfolie auf die Oberfläche des Personalisierungsdokumentes ein stempelartiges Element als Druckelement auf, welches sich um eine sich parallel zur Ebene der Oberfläche erstreckende Achse schwenken lässt. Das stempelartige, schwenkbare Element ist an seiner zu der Oberfläche des auf dem Auflageelement abgelegten Personalisierungsdokumentes hingewandten Seite bogenförmig ausgebildet, wobei diese bogenförmig ausgebildete Stempelfläche dazu dient, das stempelartige Element auf der Laminatfolie und der Oberfläche des Personalisierungsdokumentes abzurollen. Es sind mindestens zwei seitlich am stempelartigen Element angebrachten Rollen auf zwei in einem Winkel zueinander angeordnete Kurvenabrollbahnen während der Abrollbewegung abrollbar. Hierdurch wird durch einen einfachen und schnell durchführbaren druckbeaufschlagten Abrollvorgang der bogenförmigen Stempelfläche ein schnelles Verbinden der Laminatfolie mit der Oberfläche des Personalisierungsdokumentes ermöglicht, wobei eine an der Unterseite der Laminatfolie angebrachte Klebeschicht als Heißklebstoff mittels einer Erwärmung des stempelartigen Elementes aktiviert wird.

Durch eine derartige Aktivierung des Heißklebstoffes und eine zeitgleiche Druckbeaufschlagung des stempelartigen Elementes in Richtung des Auflageelementes, auf dem das zu laminierende Personalisierungsdokument liegt, findet eine zuverlässige und dauerhafte Laminierung der Oberfläche des Personalisierungsdokumentes statt, selbst dann, wenn das Personalisierungsdokument beispielsweise Wasserzeichen, Stahlstichtiefdruckzeichen und UV-Druckzeichen an seiner Oberfläche aufweist.

Die Kurvenabrollbahnen weisen in ihrem Verlauf die Form einer Evolvente bzw. eine konvexe Form auf. Hierbei sind die Kurvenabrollbahnen vorzugsweise an Grenzen eines Schwenkbereiches des schwenkbaren stempelartigen Elementes angeordnet, sodass die Rollen bzw. Räder während ihrer Abrollbewegung auf den Kurvenabrollbahnen eine Stabilisierung des sich schwenkenden stempelartigen Elementes bewirken. Zugleich stellen die Kurvenabrollbahnen mit den darauf sich abrollenden Rollen eine präzise Abrollbewegung des stempelartigen Elementes sicher.

Das stempelartige Element ist parallel zur Erstreckung der Oberfläche des Personalisierungsdokumentes während der Abrollbewegung verschiebbar, sodass eine Abrollbewegung mit Hilfe eines Verschiebens des Stempelelementes stattfinden kann. Alternativ kann das Stempelelement ortsgebunden innerhalb einer Personalisierungsanlage, die weitere Personalisierungsschritte an dem Dokument vornimmt, angeordnet sein, während das Auflageelement zusammen mit dem darauf angeordneten Dokument während der Abrollbewegung verschoben wird. Aufgrund einer derartigen Abrollbewegung werden Zykluszeiten von ca. 1 - 2 Sekunden pro Laminiervorgang erhalten.

Die Laminatfolien werden üblicherweise auf einem Laminatfolienträgerband reihenartig angeordnet, wobei das Laminatfolienträgerband fortlaufend zwischen dem stempelartigen Element und dem Auflageelement hindurchbewegt wird. Alternativ kann das Laminatfolienträgerband schrittweise fortbewegt werden.

Um Unebenheiten der Oberfläche des Personalisierungsdokumentes, wie beispielsweise eines Reisepasses, einer Ausweiskarte oder einer Smartcard jeglicher Art, während des Laminierungsvorganges auszugleichen, weist das Auflageelement vorzugsweise insgesamt drei auf seiner Auflagefläche angeordnete Schichten auf. Hierbei handelt es sich - von dem Auflageelement ausgehend in Richtung Stempelfläche betrachtet - um eine Kunststoffschicht, wie beispielsweise eine Silikon- oder Neoprenschicht, eine darüber angeordnete in Druckrichtung flexible Schicht und eine darauf angeordnete abschließende Teflonschicht. Die Teflonschicht dient zur Vermeidung von Anhaftungen von Klebstoffresten an dem Auflageelement und kann ebenso aus gleichen Gründen auf der Stempelfläche angeordnet sein.

Eine derartige Teflonschicht kann bezüglich dem Auflageelement als Teflonfolie ausgebildet sein. Die auf der Stempelfläche angeordnete Teflonschicht weist eine Dicke von 0,1 µm bis 2 mm, je nachdem, ob eine geringere oder höhere Elastizität des Schichtmaterials aufgrund unebener Oberflächen der Dokumente erforderlich ist, auf.

Die von der Stempelfläche auf die Oberseite der Laminatfolie und somit auch zeitgleich die Oberfläche des Dokuments ausgeübte Druckkraft kann individuell eingestellt werden, je nachdem, welcher Klebstoff, welches Laminatfolienmaterial und welches Dokumentenmaterial mit Oberflächenunebenheiten verwendet wird.

Die eigentliche Abrollbewegung der Stempelfläche findet mit einer konstanten Geschwindigkeit statt, die individuell eingestellt werden kann. Ebenso kann die Temperatur, auf welche die Stempelfläche und damit das stempelartige Element indirekt oder direkt aufgeheizt wird, individuell variabel oder konstant während eines Laminiervorganges eingestellt werden.

Die bogenförmige Stempelfläche weist in Abrollrichtung eine Bogenform und senkrecht zur Abrollrichtung vorzugsweise eine lineare Form auf, sodass ein Abrollen unter gleichzeitiger gleichmäßiger Druckbeaufschlagung in eine Richtung quer zu der Abrollbewegungsrichtung erfolgt.

Die Bogenform ist vorzugsweise ein Kreissegment mit einem Kreisradius, der durch Austauschen der Stempelfläche variabel eingestellt werden kann. Ebenso kann als Bogenform eine Mehrzahl aneinandergereihter Kreissegmente mit unterschiedlichen Kreisradien verwendet werden, um hierdurch eine individuelle Bogenform für eine optimierte Abrollbewegung zu erhalten. Beispielsweise kann eine derartige Stempelfläche in ihrer Mitte ein Kreisbogensegment mit einem großen Radius und in ihren Endbereichen jeweils ein Kreisbogensegment mit kleinerem Radius aufweisen, um so in den Endbereichen des Dokumentes eine örtlich begrenzte besonders hohe Druckbeaufschlagung auf die. Laminatfolie zu erhalten.

Zusätzlich oder alternativ kann die Stempelfläche auch in ihrer senkrecht zur Abrollbewegung verlaufenden Erstreckung anstelle einer ebenen Ausdehnung eine bogenförmige konkave und/oder konvexe Form aufweisen, um hierdurch beispielsweise einen erhöhten Druck auf die Randbereiche des Dokuments und der Laminatfolie während des Abrollvorganges auszuüben, sofern dies beispielsweise für die Herstellung eines Dokumentenrandes mit erhöhter Haltbarkeit gewünscht wird.

Für die Beheizung der Stempelfläche wird vorzugsweise ein an der Rückseite der Stempelfläche angeordnetes Heizelement verwendet, welches die eigentliche Stempelfläche, die beispielsweise aus einem leicht erwärmbaren und wärmebeständigem Material, wie einem Metall besteht, konstant zu erwärmen. Selbstverständlich muss die Oberflächenschicht auf der Stempelfläche dann aus wärmebeständigem Material, wie beispielsweise Teflon bestehen.

Als verwendete Laminatfolien sind auch diejenigen Laminatfolien denkbar, die ein integriertes Hologramm aufweisen, um hierdurch eine Übertragung eines Hologramms auf das Personalisierungsdokument, wie beispielsweise einem Reisepass, zu ermöglichen.

Gemäß einer bevorzugten Ausführungsform ist ein Abstreifer im Bereich des Ortes, an dem der eigentliche Laminiervorgang stattfindet, angeordnet, um die bereits auf der Oberfläche des Dokumentes auflaminierte Laminatfolie von dem fortlaufenden Laminatfolienträgerband abzulösen.

Vorteilhaft wird eine Haftung zwischen dem Laminatfolienträgerband und der Laminatfolie, die sowohl segmentartig als auch als fortlaufendes Band auf dem Laminatfolienträgerband unterseitig angeordnet sein kann, durch eine Wachsschicht aufgebaut, welche sich durch den ohnehin stattfindenden Erwärmungsvorgang der Laminatfolie von dem Laminatfolienträgerband bzw. der Laminatfolie trennt.

Der Abstreifer kann als Metallschwert ausgebildet sein und kann zusätzlich zum Loslösen der Randbereiche bzw. Kanten des laminierten Dokumentes von dem Laminatfolienträgerband dienen.

Sämtliche Teflonschichten bzw. Teflonfolien weisen eine schlechte Haftungseigenschaft für Klebstoffreste hinsichtlich des verwendeten (Heiß-) Klebstoffes auf.

Die flexible Schicht ist vorteilhaft als Stahlfolie bzw. Federstahlblech zur flächenhaften Druckverteilung des von oben auf das Auflageelement ausgeübten Druckes ausgebildet.

Die Kunststoffschicht ist vorteilhaft eine Silikonmatte, um die erhöhten Papierschichten des Dokumentes zu kompensieren.

Als Antriebseinrichtung für das stempelartige Element zur Durchführung der Abrollbewegung wird eine lineare Servoachse, die das stempelartige Element über parallel zur Oberfläche des Dokuments verlaufende Führungsleisten und ein Gelenk zu einer Abrollbewegung zwingt, verwendet. Aufgrund linear verlaufenden Führungsleisten ist eine gleichbleibende Abrollbewegung auch mittels eines Kurvenschliffs sichergestellt.

Durch eine Veränderung der Abrollgeschwindigkeit kann der Zeitzyklus, also diejenige Zeitspanne, innerhalb welcher der eigentliche Laminierungsvorgang stattfindet, variabel eingestellt werden. Derartige Zykluszeiten für das eigentliche Laminieren liegen bei Reisepässen in der Regel in einem Bereich von 0,5 bis 5 Sekunden.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Darstellung eine Seitenansicht der erfindungsge- mäßen Vorrichtung gemäß einer Ausführungsform der Erfindung;
- Fig. 2: in einer schematischen Darstellung eine Querschnittsdarstellung eines Auf- lageelementes, wie es in der erfindungsgemäßen Vorrichtung verwendet wird;
- Fig. 3: in einer schematischen Darstellung die Anordnung eines stempelartigen Elementes gegenüber einem Laminatfolienträgerband, welches unterhalb des Elementes hindurchläuft, und

- Fig. 4: in einer schematischen Darstellung eine weitere mögliche Anordnung des stempelartigen Elementes gegenüber dem Laminätfolienträgerband, wel- ches unterhalb des Elementes hindurchläuft.

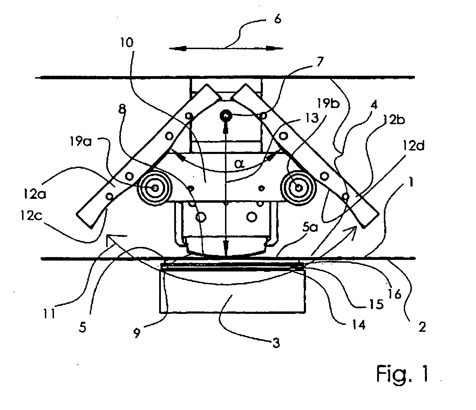

In Fig. 1 ist in einer schematischen Seitendarstellung die erfindungsgemäße Vorrichtung wiedergegeben. Ein Laminatfolienträgerband 1, an welchem segmentartig ausgebildete Laminatfolien 2 unterseitig angeordnet sind, durchläuft die erfindungsgemäße Vorrichtung zwischen einem Auflageelement 3 und einem stempelartigen Element 4 von - in Bildebene gesehen - links nach rechts.

Auf dem Auflageelement 3 liegt oberseitig auf einer Auflagefläche ein Reisepassdokument 5, dessen Oberfläche 5a mit der Laminatfolie 2 laminiert werden soll.

Das stempelartige Element 4 kann entlang des Laminatfolienträgerbandes und entlang der Oberfläche 5a mittels hier stilistisch dargestellter Führungsschienen hin und her verschoben werden, wie es durch das Bezugszeichen 6 wiedergegeben wird.

Das stempelartige Element 4 kann von oben nach unten eine Druckbeaufschlagung derart durchführen, dass es während einer stattfindenden Abrollbewegung einer Stempelfläche 8 auf der Oberfläche des Laminatfolienträgerbandes 1 und damit der Laminatfolie 2 und der Oberfläche 5a des Dokumentes 5 Druck nach unten ausübt.

Für die Durchführung der eigentlichen Abrollbewegung weist das stempelartige Element 4 eine Schwenkachse 7, deren Längsausdehnung senkrecht zur Bildebene verläuft, auf, um welche die Stempelfläche 8 einschließlich ein Heizelement 10 geschwenkt werden kann, wie es durch das Bezugszeichen 11 wiedergegeben wird.

Eine Hin- und Herverschwenkung findet innerhalb der Winkelgrenzen statt, wobei die Winkelgrenzen eines Winkels α Abrollflächenelemente 12a und 12b aufweisen, deren evolventen- bzw. konvexartig ausgebildete Abrollflächen 12c und 12d in ihrem Verlauf von einem oberen Abschnitt des stempelartigen Elementes ausgehend zu Abrollwalzen 19a und 19b hingewandt sich nach unten erstrecken. Hierbei sind die Abrollflächen kurvenartig ausgebildet und weisen im Bezug auf die Dicke der Abrollflächenelemente einen tiefstliegenden Punkt vorzugsweise auf halber Länge der Abrollflächenelemente jeweils auf. Zu den Enden der Abrollflächenelemente hingegen liegen die Abrollflächenpunkte gegenüber dem restlichen Abrollflächenelement höher. Also sind die Abrollflächenelemente in diesen Bereichen dicker ausgebildet. Eine derartige Ausbildung der Kurvenbahnen der Abrollflächen ermöglicht eine stabile und präzise Hin- und Herschwenkbewegung des stempelartigen Elementes (Stempelelement) innerhalb der Schwenkbereichsgrenzen, wobei die Abrollflächenelemente 12a, 12b gegenüber dem oberen Abschnitt des stempelartigen Elementes vorzugsweise fixiert angeordnet sind.

Die Abrollflächen können mit einer Oberflächenschicht versehen sein, die eine reibungsarme Abrollbewegung der Abrollwalzen 19a, 19b auf den Abrollflächen 12c, 12d mit sehr geringen Abnutzungserscheinungen ermöglicht.

Üblicherweise findet während eines Laminiervorganges keine Hin- und Herverschwenkung der Stempelfläche 8 und des Heizelementes 10, sondern lediglich eine Schwenkbewegung in eine Richtung, also eine Abrollbewegung beispielsweise von rechts nach links statt. Anschließend kann die Stempelfläche für einen nächsten ein neues Dokument betreffenden Laminiervorgang in entgegengesetzte Richtung verschwenkt werden oder zwischenzeitlich gegebenenfalls durch kurzzeitiges Anheben nach oben in seine Ausgangsposition verschoben werden, wie es durch den Doppelpfeil 6 angedeutet wird, um wiederum eine Abrollbewegung in die gleiche Richtung für den nächsten Laminiervorgang durchzuführen.

Das Heizelement 10 wirkt beheizend auf die Stempelfläche 8, die vorzugsweise aus Metall besteht und bogenförmig ausgebildet ist. Vorzugsweise ist die Bogenform ein Kreissegment mit einem Kreisradius 13.

Die in dem Heizelement 10 verursachten Erwärmungen zum Aufheizen der Stempelfläche 8 liegen in einem Temperaturbereich von 100° - 250° Celsius bezogen auf die Stempelflächentemperatur. Eine derartige Temperatur muss zwingend zur Aktivierung eines Heißklebstoffes erhalten werden.

Die Stempelfläche 8 weist an ihrer Außenfläche eine Oberflächenbeschichtung 9 in Form einer Teflonschicht auf, um Anhaftungen von Klebstoffen, die bei dem eigentlichen Laminiervorgang erwärmt werden und somit gegebenenfalls über die Folie hinaustreten, zu vermeiden.

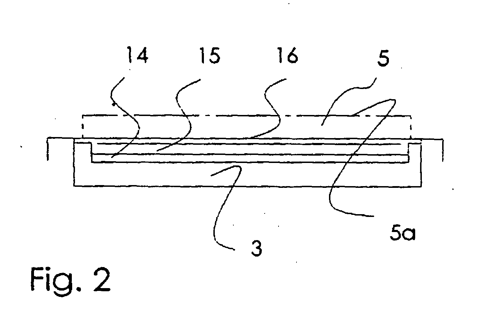

In Fig. 2 wird in einer schematischen Darstellung ein Auflageelement, wie es in der erfindungsgemäßen Vorrichtung verwendet werden kann, im Querschnitt dargestellt. Dieses Auflageelement 3 dient als Unterlage und stellt einen Stahlamboss 3 dar, auf dessen Auflagefläche eine Kunststoffschicht, beispielsweise als Silikon- oder Neoprenschicht, angeordnet ist, die vorzugsweise folienartig ausgebildet ist. Oberhalb der Kunststofffolie 14 ist ein Federstahlblech 15 angeordnet, um eine größtmögliche Druckverteilung des von oben ausgeübten Druckes auf die Fläche des zu laminierenden Dokumentes zu ermöglichen.

Abschließend ist oberseitig eine Teflonfolie 16 angeordnet, die sich bis über die Randbereiche des Stahlambosses 3 hinwegerstreckt, um keinen an dem Stahlamboss oder den anderen Folien haftenden Klebstoff zu erhalten.

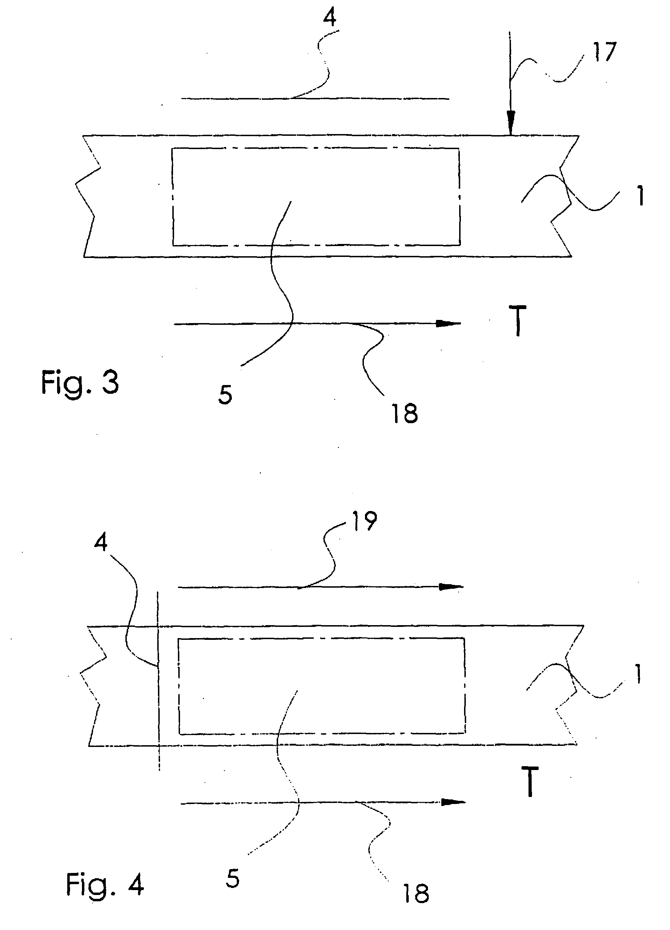

In Fig. 3 ist in einer schematischen Darstellung die Position eines stempelartigen Elementes gegenüber einem Laminatfolienträgerband und in Fig. 4 eine weitere Position des stempelartigen Elementes gegenüber dem Laminatfolienträgerband dargestellt. Wie der Fig. 3 zu entnehmen ist, ist das Element 4 seitlich zu dem in Richtung 18 sich fortbewegenden Laminatfolienträgerband 1 angeordnet und führt eine Abrollbewegung quer zu dem Verlauf des Laminatfolienträgerbandes 1, also in Richtung des Pfeiles 17 durch. Unterhalb des Laminatfolienträgerbandes ist schematisch das zu laminierende Dokument 5 dargestellt.

In Fig. 4 wird hingegen gegenüber der in Fig. 3 gezeigten Laminierrichtung eine in Längsrichtung des Laminatfolienträgerbandes 1 verlaufende Laminierrichtung durch den Pfeil 19 dargestellt. In diesem Fall ist das stempelartige Element 4 über dem Band 1 angeordnet, welches sich in Richtung des Pfeiles 18 fortbewegt.

Alternativ kann ein Laminiervorgang durch eine Abrollbewegung erfolgen, die diagonal zu der rechtsförmigen Grundfläche des Reisepasses bzw. des zu laminierenden Dokumentes verläuft.

### Bezugszeichenliste

- 1: Laminatfolienträgerband
- 2: Laminatfolie
- 3: Auflageelement
- 4: stempelartiges Element
- 5: Personalisierungsdokument
- 5a: Oberfläche des Personalisierungsdokumentes
- 6: Verschieberichtung
- 7: Schwenkachse
- 8: Stempelfläche
- 9: Oberflächenbeschichtung
- 10: Heizelement
- 11: Schwenkrichtung
- 12a, 12b: Abrollflächenelemente an den Schwenkbereichsgrenzen
- 12c, 12d: evolventenartig ausgebildete Abrollflächen
- 13: Kreisradius
- 14: Kunststofffolie
- 15: Federstahlblech
- 16: Teflonfolie
- 17, 19: Laminierrichtungen
- 18: Fortbewegungsrichtung
- 19a, 19b: Abrollwalzen

## Patentansprüche

1. Laminiervorrichtung für Personalisierungsdokumente (5) zum serienmäßigen Laminieren von Oberflächen (5a) der Personalisierungsdokumente (5), mit einem Auflageelement (3) zum Auflegen mindestens eines der Personalisierungsdokumente (5) und einem Druckelement (4) zum Andrücken einer Laminatfolie (2) auf die Oberfläche (5a) des auf dem Auflageelement (3) angeordneten Personalisierungsdokumentes (5), wobei das Druckelement (4) als ein um eine sich parallel zur Ebene der Oberfläche (5a) erstreckende Achse (7) schwenkbares stempelartiges Element ausgebildet ist, dessen zur Oberfläche (5a) des Personalisierungsdokumentes (5) hingewandte Seite eine bogenförmig ausgebildete Stempelfläche (8) darstellt, um diese auf der Laminatfolie (2) und der Oberfläche (5a) des Personalisierungsdokumentes (5) abzurollen, **dadurch gekennzeichnet, dass** zumindest zwei seitlich am stempelartigen Element angebrachte Rollen auf zwei in einem Winkel (α) zueinander angeordnete Kurvenabrollbahnen (12c, 12d) während der Abrollbewegung (11) abrollbar sind.

2. Laminiervorrichtung nach Anspruch 1,
**dadurch gekennzeichnet, dass**
das stempel artige Element parallel zur Erstreckung der Oberfläche (5a) des Personalisierungsdokumentes (5) während der Abrollbewegung (11) verschiebbar (6) ist.

3. Laminiervorrichtung nach Anspruch 1 oder 2,
**dadurch gekennzeichnet, dass**
die bogenförmige Stempelfläche (8) in Abrollrichtung eine Bogenform und senkrecht zur Abrollrichtung eine lineare Form aufweist.

4. Laminiervorrichtung nach Anspruch 3,
**dadurch gekennzeichnet, dass**
die Bogenform mindestens ein Kreissegment mit mindestens einem Kreisradius (13) darstellt.

5. Laminiervorrichtung nach einem der vorangegangenen Ansprüche,
**dadurch gekennzeichnet, dass**
die Kurvenabrollbahnen (12c, 12d) in ihrem Verlauf die Form einer Evolvente aufweisen.

6. Laminiervorrichtung nach einem der vorangegangenen Ansprüche,
**dadurch gekennzeichnet, dass**
die Kurvenabrollbahnen (12c, 12d) an Grenzen eines Schwenkbereichs des schwenkbaren, stempelartigen Elements angeordnet sind.

7. Laminiervorrichtung nach einem der vorangegangenen Ansprüche,
**dadurch gekennzeichnet, dass**
die Stempelfläche (8) mit einer Oberflächenschicht (9) oberflächenbeschichtet ist.

8. Laminiervorrichtung nach Anspruch 7,
**dadurch gekennzeichnet, dass**
die Oberflächenschicht (9) eine Teflonschicht ist.

9. Laminiervorrichtung nach einem der vorangegangenen Ansprüche,
**dadurch gekennzeichnet, dass**
die Stempelfläche (8) direkt oder indirekt mit einer vorbestimmbaren Temperatur beheizbar ist.

10. Laminiervorrichtung nach Anspruch 9,
**dadurch gekennzeichnet, dass**
die Stempelfläche (8) mit einem Heizelement (10) verbunden ist.

11. Laminiervorrichtung nach einem der vorangegangenen Ansprüche,
**dadurch gekennzeichnet, dass**
das Auflageelement (3) auf seiner Auflagefläche eine Kunststoffschicht (14), eine darüber angeordnete in Druckrichtung flexible Schicht (15) und eine darauf angeordnete Teflonschicht (16) aufweist.

12. Laminiervorrichtung nach Anspruch 11,
**dadurch gekennzeichnet, dass**
die flexible Schicht ein Federstahlblech (15) ist.

13. Laminiervorrichtung nach einem der vorangegangenen Ansprüche,
**gekennzeichnet durch**
einen Abstreifer zum Abstreifen der auf der Oberfläche (5a) des Personalisierungsdokumentes (5) auflaminierten Laminatfolie (2) von einem fortlaufenden Laminatfolienträgerband (1).

## Claims

1. Laminating apparatus for personalizing documents (5) for serial laminating of surfaces (5a) of said personalizing documents (5) comprising a support element (3) for supporting at least one of said personalizing elements (5) and a pressing element (4) for pressing a laminate film (2) onto the surface (5a) of the personalization document (5) which is arranged on the support element (3), wherein the pressing element (4) is configured as a ram-like element which can be pivoted about an axis (7) which extends parallel to the plane of the surface (5a), the side of which faces the surface (5a) of said personalization document (5) being configured as an arcuate ram face (8), for rolling over the laminate film (2) and the surface (5a) of the personalization document (5), **characterized in that** at least two rollers which are arranged laterally to the ram-like element can be rolled off during the roll-off movement (11) on two curve-roll-off webs (12c, 12d) which are arranged at an angle (α) with respect to one another.

2. Laminating apparatus according to claim 1,
**characterized in that** the ram-like element can be displaced (6) parallel to the extension of the surface (5a) of said personalizing element (5) during the roll-off movement (11).

3. Laminating apparatus according to claim 1 or 2,
**characterized in that** the arcuate ram face (8) has a curved shape in the roll-off direction and a linear shape perpendicular to the roll-off direction.

4. Laminating apparatus according to claim 3,
**characterized in that** the curved shape consists of at least a circle segment with at least one circle radius (13).

5. Laminating apparatus according to any of the foregoing claims,
**characterized in that** the curve-roll-off webs (12c, 12d) have an involute shape in profile.

6. Laminating apparatus according to any of the foregoing claims,
**characterized in that** the curve-roll-off webs (12c, 12d) are arranged at barriers of a pivoting range of the pivoting ram-like element.

7. Laminating apparatus according to any of the foregoing claims,
**characterized in that** the ram face (8) is surface-coated with a surface layer (9).

8. Laminating apparatus according to claim 7,
**characterized in that** the surface layer (9) is a Teflon layer.

9. Laminating apparatus according to any of the foregoing claims,
**characterized in that** the ram face (8) can be directly or indirectly heated to a predetermined temperature.

10. Laminating apparatus according to claim 9,
**characterized in that** the ram face (8) is connected with a heating element (10).

11. Laminating apparatus according to any of the foregoing claims,
**characterized in that** the support element (3) has on its support surface a plastic layer (14), a flexible layer (15) arranged above in the pressing direction and a Teflon layer (16) arranged above the flexible layer.

12. Laminating apparatus according to claim 11,
**characterized in that** the flexible layer comprises of a spring steel sheet metal (15).

13. Laminating apparatus according to any of the foregoing claims,
**characterized by** a deflector for deflecting the laminate film (2) which is laminated on the surface (5a) of said personalizing document (5) from a continuous laminate film carrier belt (1).

## Revendications

1. Dispositif de laminage pour documents personnalisés (5) destiné au laminage en série de surfaces (5a) des documents personnalisés (5), comprenant un élément de support (3) destiné à recevoir au moins un des documents personnalisés (5) et un élément de pression (4) servant à appliquer par pression une feuille laminée (2) sur la surface (5a) du document personnalisé (5) disposé sur l'élément de support (3), l'élément de pression (4) étant conçu comme un élément faisant tampon et pouvant pivoter autour d'un axe (7) qui s'étend parallèlement au plan de ladite surface (5a), dont le côté tourné vers la surface (5a) du document personnalisé (5) représente une surface de tampon (8) en forme d'arc pour faire rouler celle-ci sur la feuille laminée (2) et la surface (5a) du document personnalisé (5),
**caractérisé en ce que**
au moins deux rouleaux montés latéralement sur l'élément faisant tampon peuvent rouler sur des voies de roulement curvilignes (12c, 12d) disposées l'une par rapport à l'autre selon un angle (α), pendant le mouvement de roulement (11).

2. Dispositif de laminage selon la revendication 1,
**caractérisé en ce que**
l'élément faisant tampon peut être déplacé (6) parallèlement à l'étendue de la surface (5a) du document personnalisé (5), pendant le mouvement de roulement (11).

3. Dispositif de laminage selon la revendication 1 ou 2,
**caractérisé en ce que**
la surface de tampon (8) en forme d'arc présente une forme arquée dans la direction de roulement et une forme linéaire perpendiculairement à la direction de roulement.

4. Procédé de laminage selon la revendication 3,
**caractérisé en ce que**
la forme arquée représente au moins un segment de cercle avec au moins un rayon de cercle (13).

5. Dispositif de laminage selon l'une des revendications précédentes,
**caractérisé en ce que**
les voies de roulement curvilignes (12c, 12d) présentent dans leur évolution une forme en développante.

6. Dispositif de laminage selon l'une des revendications précédentes,
**caractérisé en ce que**
les voies de roulement curvilignes (12c, 12d) sont disposées aux limites d'une zone de pivotement de l'élément faisant tampon et pouvant pivoter.

7. Dispositif de laminage selon l'une des revendications précédentes,
**caractérisé en ce que**
la surface de tampon (8) est revêtue d'une couche superficielle (9).

8. Dispositif de laminage selon la revendication 7,
**caractérisé en ce que**
la couche superficielle (9) est constituée par une couche de téflon.

9. Dispositif de laminage selon l'une des revendications précédentes,
**caractérisé en ce que**
la surface de tampon (8) peut être chauffée directement ou indirectement pour être portée à une température pouvant être prédéfinie.

10. Dispositif de laminage selon la revendication 9,
**caractérisé en ce que**
la surface de tampon (8) est reliée à un élément de chauffage (10).

11. Dispositif de laminage selon l'une des revendications précédentes,
**caractérisé en ce que**
l'élément de support (3) présente sur sa surface de support une couche de matière synthétique (14) qui est surmontée d'une couche souple (15) dans la direction de pression, sur laquelle est disposée une couche de téflon (16).

12. Dispositif de laminage selon la revendication 11,
**caractérisé en ce que**
la couche souple est constituée par une tôle d'acier pour ressort (15).

13. Dispositif de laminage selon l'une des revendications précédentes,
**caractérisé par**
un racloir pour racler d'une bande-support de feuille laminée continue (1) la feuille laminée (2) posée par laminage sur la surface (5a) du document personnalisé (5).
